# EUROPEAN PATENT SPECIFICATION

(11) **EP 3 200 354 B1**
(45) Date of publication and mention of the grant of the patent: **29.08.2018**
(21) Application number: 14906432.1
(22) Date of filing: 18.11.2014
(51) Int. Cl.: H04B 3/32

(54) **CROSSTALK CANCELLATION METHOD, APPARATUS AND SYSTEM**
NEBENSPRECHUNTERDRÜCKUNGSVERFAHREN, -VORRICHTUNG UND -SYSTEM
PROCÉDÉ, APPAREIL ET SYSTÈME D'ANNULATION DE DIAPHONIE

(43) Date of publication of application: 02.08.2017
(73) Proprietor: Huawei Technologies Co., Ltd., Longgang District Shenzhen, Guangdong 518129 (CN)
(72) Inventor: LI, Hao, Shenzhen Guangdong 518129 (CN); XIE, Genmao, Shenzhen Guangdong 518129 (CN); LI, Ying, Shenzhen Guangdong 518129 (CN)
(74) Representative: Thun, Clemens
(86) International application number: PCT/CN2014/091400
(87) International publication number: WO 2016/077991

(56) References cited:
- EP-A1- 2 802 083
- WO-A1-2014/054043
- CN-A- 103 004 099
- CN-A- 103 765 789
- CN-A- 103 828 250
- US-A1- 2011 007 623
- SCKIPIO TECHNOLOGIES: "G.fast: Hybrid precoder scheme;TD2013-01-4A-052", ITU-T DRAFT ; STUDY PERIOD 2013-2016, INTERNATIONAL TELECOMMUNICATION UNION, GENEVA ; CH, vol. 4a/15, 21 March 2013 (2013-03-21), pages 1-5, XP044114898, [retrieved on 2013-03-21]

## Description

### TECHNICAL FIELD

Embodiments of the present invention relate, to the communications technologies, and in particular, to a crosstalk elimination method, an apparatus, and a system.

### BACKGROUND

In a digital subscriber line (DSL for short) technology that uses a copper broadband access technology (G.fast), a frequency spectrum is extended, and a frequency band is up to 212 MHz. Therefore, the International Telecommunication Union-Telecommunication Standardization Sector (ITU-T for short) uses time division multiplexing (, TDM for short) as a duplex manner of G.fast. Because of an electromagnetic induction principle, crosstalk occurs between signals on multiple lines of a DSL access multiplexer (DSLAM for short).

In the prior art, linear crosstalk elimination is mainly used, and crosstalk elimination is implemented by using linear precoding and crosstalk cancellation. However, G.fast has severe crosstalk in a high frequency band of 212 MHz, and linear precoding and crosstalk cancellation can hardly provide a significant signal-to-noise ratio (SNR for short) gain on some sub-carriers of the high frequency band. Therefore, nonlinear crosstalk elimination starts to be concerned in the industry.

For example, WO 2014/054043A1 refers to a method employing linear preceding and non-linear precoding for transmitting data between at least two transmitters and a plurality of receivers via a plurality of communication channels over a plurality of subcarrier frequencies, the method comprising the procedures of transmitting by either one of said at least two transmitters, at least two training signals to respective said receivers; receiving by respective said receivers, said at least two training signals; evaluating channel characteristics of at least part of said communication channels, according to said at least two training signals; determining a precoding scheme selection that defines for at least part of said communication channels, over which of said subcarrier frequencies, said data transmitted shall be preceded using either one of linear precoding and non-linear precoding, according to evaluated said channel characteristics; precoding said data according to determined said precoding scheme selection; and transmitting said data according said precoding scheme selection.

However, linear and nonlinear modes are incompatible in current crosstalk elimination. This causes a fact that customer premises equipments (CPE for short) in different modes cannot access a network at the same time. For example, a nonlinear CPE accesses a network first, and then a linear CPE is activated. A vectoring control entity (VCE for short) needs to limit access of the linear CPE to the network, or make all online nonlinear CPEs disconnect from the network, and then the nonlinear CPEs access the network again in the linear mode. In this way, communication performance of G.fast is greatly affected.

### SUMMARY

Embodiments of the present invention provide a crosstalk elimination method, an apparatus, and a system, so as to resolve a problem that CPEs in different modes cannot access a network at the same time, and improve communication performance of G.fast.

A crosstalk elimination method performed by a vectoring control entity, VCE, the method comprising:
- when a quantity of online customer premises equipments, CPEs, is to change, determining a type of online CPEs before the change, and predetermining a type of online CPEs after the change, wherein the type of CPEs means that all online CPEs are nonlinear CPEs or are a mixture of nonlinear CPEs and linear CPEs, the linear CPEs are CPEs that support only linear crosstalk elimination for a line connected to the CPEs, and the nonlinear CPEs are CPEs that support both linear crosstalk elimination and nonlinear crosstalk elimination for a line connected to the CPEs,
   wherein the step of when the quantity of online customer premises equipments CPEs is to change, determining the type of online CPEs before the change, and predetermining the type of online CPEs after the change comprises:
   ∘ when at least one linear CPE accesses a network, determining that all online CPEs before an access to the network are nonlinear CPEs, and predetermining that online CPEs after the access to the network are a mixture of nonlinear CPEs and linear CPEs;
   ∘ when all online linear CPEs disconnect from the network, determining that online CPEs before a disconnection from the network are a mixture of nonlinear CPEs and linear CPEs, and predetermining that all online CPEs after the disconnection from the network are nonlinear CPEs; and
- if the determined type of online CPEs before the change is inconsistent with the predetermined type of online CPEs after the change, sending, according to a crosstalk elimination manner supported by the predetermined type of online CPEs after the change, switch instruction information to the online CPEs before the change, wherein the switch instruction information comprises information that is used to indicate the crosstalk elimination manner used by the online CPEs after the change,
   wherein the step of if the determined type of online CPEs before the change is inconsistent with the predetermined type of online CPEs after the change, sending, according to the crosstalk elimination manner supported by the predetermined type of online CPEs after the change, switch instruction information to the online CPEs before the change comprises:
   ∘ if a determined type of online CPEs before the access to the network is inconsistent with a predetermined type of online CPEs after the access to the network, sending, according to a linear crosstalk elimination manner supported by the predetermined type of online CPEs after the access to the network, the switch instruction information to the online CPEs before the access to the network;
   ∘ if a determined type of online CPEs before the disconnection from the network is inconsistent with a predetermined type of online CPEs after the disconnection from the network, sending, according to a nonlinear crosstalk elimination manner supported by the predetermined type of online CPEs after the disconnection from the network, the switch instruction information to the online CPEs before the disconnection from the network.

In a first implementation manner of the first aspect before the sending switch instruction information to the online CPEs before the change, the method further comprises:
if the crosstalk elimination manner supported by the predetermined type of online CPEs after the change is the linear crosstalk elimination manner, obtaining a linear crosstalk elimination coefficient according to the linear crosstalk elimination manner; or
if the crosstalk elimination manner supported by the predetermined type of online CPEs after the change is the nonlinear crosstalk elimination manner, obtaining a nonlinear crosstalk elimination coefficient according to the nonlinear crosstalk elimination manner.

In a second implementation form of the first aspect the switch instruction information further comprises the nonlinear crosstalk elimination coefficient.

In a third implementation form of the first aspect the switch instruction information is information that is encapsulated in a preset field in online reconfiguration signaling.

In a second aspect a vectoring control entity, VCE, configured and intended to perform any of the above methods is provided.

According to the crosstalk elimination method, the apparatus, and the system in the embodiments of the present invention, a mode to be switched to is determined according to crosstalk elimination used by CPEs, and the CPEs are instructed, in an instruction information manner, to perform a switch, so that an online switch of the CPEs is implemented, a problem that CPEs in different modes cannot access a network at the same time is resolved, and communication performance of G.fast is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a crosstalk elimination method according to the present invention;
FIG. 2 is a flowchart of another embodiment of a crosstalk elimination method according to the present invention;
FIG. 3 is a flowchart of still another embodiment of a crosstalk elimination method according to the present invention;
FIG. 4 is a flowchart of yet another embodiment of a crosstalk elimination method according to the present invention;
FIG. 5 is a schematic structural diagram of an embodiment of a VCE according to the present invention;
FIG. 6 is a schematic structural diagram of another embodiment of a VCE according to the present invention;
FIG. 7 is a schematic structural diagram of an embodiment of a CPE according to the present invention;
FIG. 8 is a schematic structural diagram of still another embodiment of a VCE according to the present invention;
FIG. 9 is a schematic structural diagram of another embodiment of a CPE according to the present invention; and
FIG. 10 is a schematic structural diagram of an embodiment of a copper broadband access system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

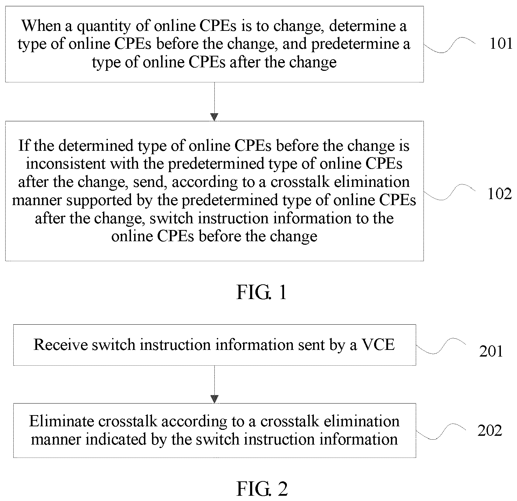

FIG. 1 is a flowchart of an embodiment of a crosstalk elimination method according to the present invention. As shown in FIG. 1, the method in this embodiment may include the following steps.

Step 101: When a quantity of online CPEs is to change, determine a type of online CPEs before the change, and predetermine a type of online CPEs after the change.

The type of CPEs means that all online CPEs are nonlinear CPEs or are a mixture of nonlinear CPEs and linear CPEs. The linear CPEs are CPEs that support only linear crosstalk elimination for a line connected to the CPEs. The nonlinear CPEs are CPEs that support both linear crosstalk elimination and nonlinear crosstalk elimination for a line connected to the CPEs.

This embodiment may be executed by a vectoring control entity (VCE for short). In the prior art, linear and nonlinear modes are incompatible in a crosstalk elimination method. If a nonlinear customer premises equipment (CPE for short) accesses a network first, and a linear CPE needs to access the network subsequently, in view of a capability of the linear CPE to support only linear crosstalk elimination, the VCE may use two processing methods: limiting access of the linear CPE to the network; or making all online nonlinear CPEs disconnect from the network, where the nonlinear CPEs can access the network again only when switched to a linear crosstalk elimination mode. The two methods greatly affect communication performance of a copper broadband access technology (G.fast). Both limiting the access to a network and the access again after a disconnection affect common communication of a user. In the present invention, when a linear CPE and a nonlinear CPE are online at the same time, limited by the capability of the linear CPE, devices in a G.fast system such as a VCE, CPE, and a central office (CO for short) can only use a linear crosstalk elimination manner to eliminate crosstalk between multiple signals. When only the nonlinear CPE is online, the devices in the G.fast system can use a nonlinear crosstalk elimination manner to eliminate the crosstalk between the multiple signals. Therefore, provided that a quantity of online CPEs in the G.fast system is to change, the VCE needs to first determine a type of online CPEs before the change, and predetermine a type of online CPEs after the change.

Step 102: If the determined type of online CPEs before the change is inconsistent with the predetermined type of online CPEs after the change, send, according to a crosstalk elimination manner supported by the predetermined type of online CPEs after the change, switch instruction information to the online CPEs before the change.

The switch instruction information includes information that is used to indicate a crosstalk elimination manner used by the online CPEs after the change.

After the VCE determines the type of online CPEs before the change and the predetermined type of online CPEs after the change, if types of online CPEs before and after the change are inconsistent, that is, one is that all online CPEs are nonlinear CPEs, and the other one is that online CPEs are a mixture of nonlinear CPEs and linear CPEs, in this case, the VCE needs to send, according to the crosstalk elimination manner supported by the type of online CPEs after the change, the switch instruction information to the online CPEs before the change, so that the CPEs switch a crosstalk elimination manner that is being used by the CPEs to an indicated manner. Because only nonlinear CPEs support both a linear crosstalk elimination algorithm and a nonlinear crosstalk elimination algorithm, in the present invention, an object to which the switch instruction information sent to the online CPEs before the change is sent is mainly the nonlinear CPEs. That is, the VCE implements an online switch of the nonlinear CPEs by sending the switch instruction information to the online CPEs before the change, unlike the prior art in which the nonlinear CPEs need to access the network again after a disconnection. Because the nonlinear CPEs may be switched to the linear crosstalk elimination manner, the access of the linear CPEs to the network does not need to be limited due to a fact that the G.fast system currently does not use linear crosstalk elimination. Alternatively, after all the linear CPEs disconnect from the network, the nonlinear CPEs may be switched to nonlinear crosstalk elimination that has a better effect, so as to improve communication performance. The switch instruction information includes information that indicates a crosstalk elimination manner used by the online CPEs after the change. For example, the information may be information of one byte. If the byte is set to 1, the linear crosstalk elimination manner is indicated; or if the byte is set to 0, the nonlinear crosstalk elimination manner is indicated. There may be another switch instruction manner, which is not limited in the present invention.

In this embodiment, a VCE triggers a change of a crosstalk elimination manner according to a change of a type of online CPEs, and instructs, in an instruction information manner, online CPEs before the change to perform a switch, so that an online switch of the CPEs is implemented, a problem that CPEs in different modes cannot access a network at the same time is resolved, and communication performance of G.fast is improved.

Further, the switch instruction information is information that is encapsulated in a preset field in online reconfiguration signaling.

Specifically, after determining that the types of online CPEs before and after the change are inconsistent, the VCE may directly send individual information to CPEs according to the crosstalk elimination manner supported by the predetermined type of online CPEs after the change. The information is the switch instruction information. Alternatively, the switch instruction information may be written into a preset field of existing online reconfiguration (OLR for short) signaling to form vector mode switch (VMS for short) OLR signaling.

FIG. 2 is a flowchart of another embodiment of a crosstalk elimination method according to the present invention. As shown in FIG. 2, the method in this embodiment may include the following steps.

Step 201: Receive switch instruction information sent by a VCE.

The switch instruction information includes information that is used to indicate a crosstalk elimination manner.

This embodiment may be executed by a CPE that supports both a linear crosstalk elimination manner and a nonlinear crosstalk elimination manner. When a G.fast system needs to switch a crosstalk elimination manner, the CPE receives the switch instruction information sent by the VCE. By using the switch instruction information, the CPE can learn a crosstalk elimination manner that is to be used.

Step 202: Eliminate crosstalk according to a crosstalk elimination manner indicated by the switch instruction information.

After learning, according to the switch instruction information, the crosstalk elimination manner that is to be used, the CPE may perform an online switch on a crosstalk elimination manner that is being used currently, and use the crosstalk elimination manner to eliminate crosstalk.

In this embodiment, a CPE performs, according to switch instruction information, an online switch on a crosstalk elimination manner that is being used currently, and uses a switched crosstalk elimination manner to eliminate crosstalk, so as to resolve a problem that CPEs in different modes cannot access a network at the same time, and improve communication performance of G.fast.

The following uses several specific embodiments to describe in detail the technical solution of the method embodiment shown in FIG. 1 or FIG. 2. In the following method embodiments, a G.fast system includes a VCE, nonlinear CPE, linear CPE, and a CO. There are more than one linear CPE and more than one nonlinear CPE.

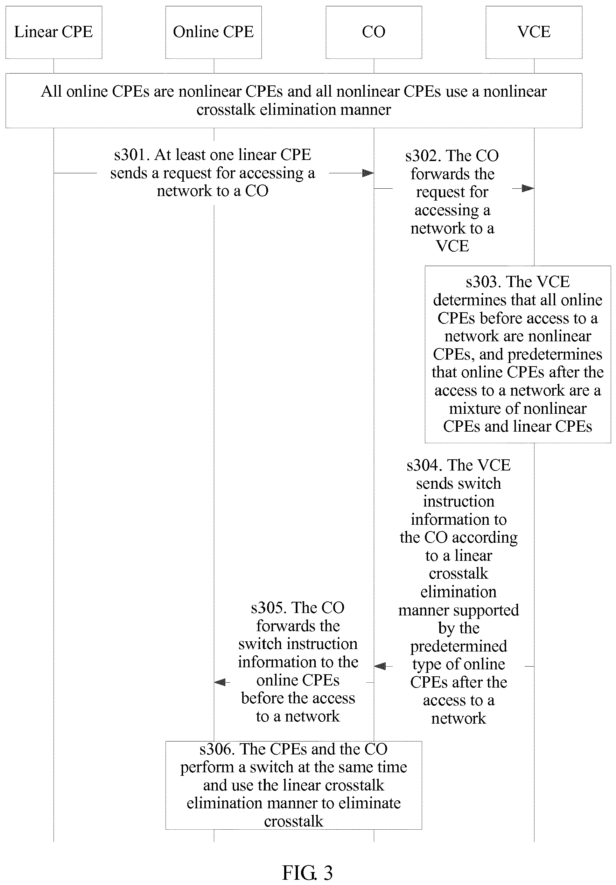

FIG. 3 is a flowchart of still another embodiment of a crosstalk elimination method according to the present invention. As shown in FIG. 3, a current status of the method in this embodiment is that all online CPEs are nonlinear CPEs and all nonlinear CPEs use a nonlinear crosstalk elimination manner. The method may include the following steps.

s301. At least one linear CPE sends a request for accessing a network to a CO.

s302. The CO forwards the request for accessing a network to a VCE.

s303. The VCE determines that all online CPEs before access to a network are nonlinear CPEs, and predetermines that online CPEs after the access to a network are a mixture of nonlinear CPEs and linear CPEs.

Before the at least one linear CPE sends the request for accessing a network, all online CPEs in a G.fast system are nonlinear CPEs, and the VCE, the nonlinear CPEs, and the CO all use the nonlinear crosstalk elimination manner. In this case, the linear CPE needs to access the network. Therefore, the VCE predetermines that a type of online CPEs after the access to a network is to change to a mixture of nonlinear CPEs and linear CPEs, which is inconsistent with a type of online CPEs before the access to a network.

s304. The VCE sends switch instruction information to the CO according to a linear crosstalk elimination manner supported by the predetermined type of online CPEs after the access to a network.

The online CPEs after the access to a network include nonlinear CPEs and linear CPEs, and the linear CPEs do not support the nonlinear crosstalk elimination manner. Therefore, after the linear CPE accesses the network, the G.fast system can only use the linear crosstalk elimination manner. In this case, a signal-to-noise ratio (Signal/Noise, SNR for short) may decrease. To avoid a bit error, a quantity of bits of bearer data needs to be reduced. According to a current SNR and a consideration of an SNR loss that may be caused by a crosstalk elimination switch, an SNR after the switch may be estimated, and a new linear crosstalk elimination coefficient may be obtained. The switch instruction information sent by the VCE may be an individual message, or may be encapsulated in a preset field in OLR signaling. For example, the OLR signaling may be transmitter initiated gain adjustment (TIGA for short), and one field in reserved fields of the TIGA is preset to be used to fill the switch instruction information.

s305. The CO forwards the switch instruction information to the online CPEs before the access to a network.

s306. The CPEs and the CO perform a switch at the same time and use the linear crosstalk elimination manner to eliminate crosstalk.

In this embodiment, a VCE triggers a change of a crosstalk elimination manner according to a change of a type of online CPEs, and instructs, in an instruction information manner, online CPEs before the change to perform a switch, so that an online switch of the CPEs is implemented, a problem that CPEs in different modes cannot access a network at the same time is resolved, and communication performance of G.fast is improved.

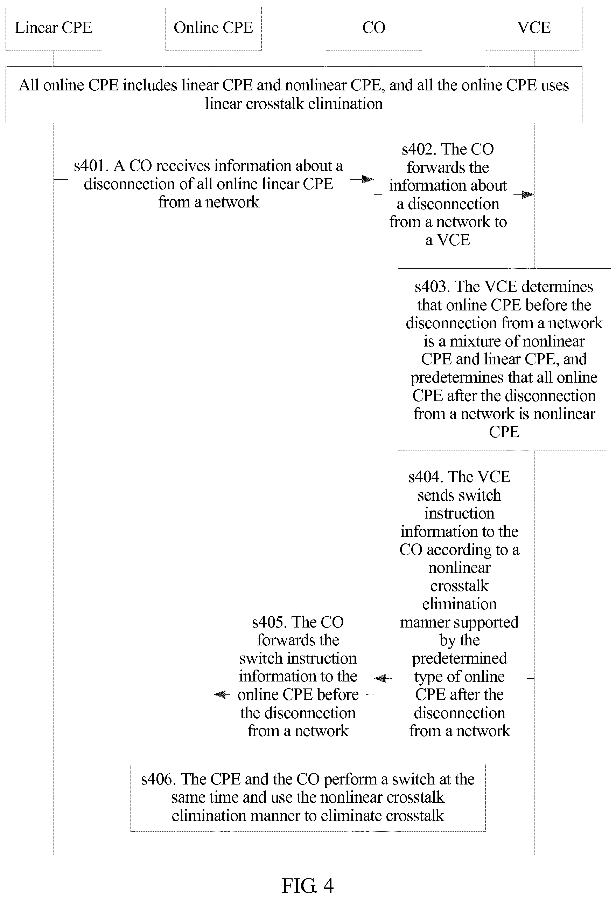

FIG. 4 is a flowchart of yet another embodiment of a crosstalk elimination method according to the present invention. As shown in FIG. 4, a current status of the method in this embodiment is that all online CPEs include linear CPEs and nonlinear CPEs, and all the online CPEs use linear crosstalk elimination. The method may include the following steps.

s401. A CO receives information about a disconnection of all online linear CPEs from a network.

s402. The CO forwards the information about a disconnection from a network to a VCE.

s403. The VCE determines that online CPEs before the disconnection from a network are a mixture of nonlinear CPEs and linear CPEs, and predetermines that all online CPEs after the disconnection from a network are nonlinear CPEs.

Before all the online linear CPEs disconnect from the network, online CPEs in a G.fast system include linear CPEs and nonlinear CPEs, and the VCE, the linear CPEs, the nonlinear CPEs, and the CO all use a linear crosstalk elimination manner. In this case, all linear CPEs are to disconnect from the network. Therefore, the VCE predetermines that a type of online CPEs after the disconnection from a network is to change to purely nonlinear CPEs, which is inconsistent with a type of online CPEs before the disconnection from a network.

s404. The VCE sends switch instruction information to the CO according to a nonlinear crosstalk elimination manner supported by the predetermined type of online CPEs after the disconnection from a network.

The online CPEs after the disconnection from a network only include nonlinear CPEs. Therefore, after all the linear CPEs disconnect from the network, the G.fast system may use the nonlinear crosstalk elimination manner. The switch instruction information sent by the VCE may be an individual message, or may be encapsulated in a preset field in OLR signaling. For example, the OLR signaling may be TIGA, and one field in reserved fields of the TIGA is preset to be used to fill the switch instruction information.

s405. The CO forwards the switch instruction information to the online CPEs before the disconnection from a network.

s406. The CPEs and the CO perform a switch at the same time and use the nonlinear crosstalk elimination manner to eliminate crosstalk.

In this embodiment, a VCE triggers a change of a crosstalk elimination manner according to a change of a type of online CPEs, and instructs, in an instruction information manner, online CPEs before the change to perform a switch, so that an online switch of the CPEs is implemented, a problem that CPEs in different modes cannot access a network at the same time is resolved, and communication performance of G.fast is improved.

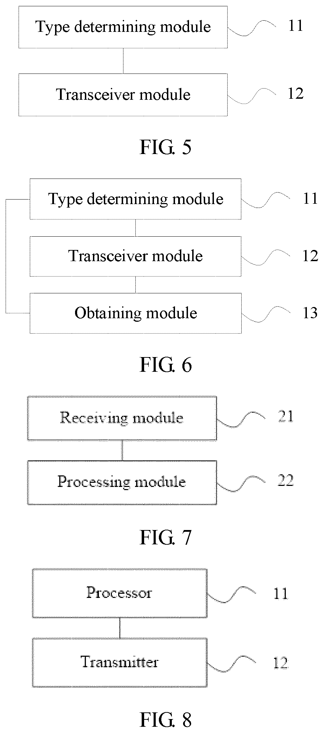

FIG. 5 is a schematic structural diagram of an embodiment of a VCE according to the present invention. As shown in FIG. 5, an apparatus in this embodiment may include a type determining module 11 and a transceiver module 12. The type determining module 11 is configured to: when a quantity of online customer premises equipments CPEs is to change, determine a type of online CPEs before the change, and predetermine a type of online CPEs after the change, where the type of CPEs means that all online CPEs are nonlinear CPEs or are a mixture of nonlinear CPEs and linear CPEs, the linear CPEs are CPEs that support only linear crosstalk elimination for a line connected to the CPEs, and the nonlinear CPEs are CPEs that support both linear crosstalk elimination and nonlinear crosstalk elimination for a line connected to the CPEs. The transceiver module 12 is configured to: if the determined type of online CPEs before the change is inconsistent with the predetermined type of online CPEs after the change, send, according to a crosstalk elimination manner supported by the predetermined type of online CPEs after the change, switch instruction information to the online CPEs before the change. The switch instruction information includes information that is used to indicate a crosstalk elimination manner used by the online CPEs after the change.

The apparatus in this embodiment may be configured to execute the technical solution of the method embodiment shown in FIG. 1, and implementation principles and technical effects of the apparatus are similar and are not repeatedly described herein.

Further, the type determining module 11 is specifically configured to: when at least one linear CPE accesses a network, determine that all online CPEs before the access to a network are nonlinear CPEs, and predetermine that online CPEs after the access to a network are a mixture of nonlinear CPEs and linear CPEs. The transceiver module 12 is specifically configured to: if the determined type of online CPEs before the access to a network is inconsistent with the predetermined type of online CPEs after the access to a network, send, according to a linear crosstalk elimination manner supported by the predetermined type of online CPEs after the access to a network, the switch instruction information to the online CPEs before the access to a network.

Further, the type determining module 11 is specifically configured to: when all online linear CPEs disconnect from a network, determine that online CPEs before the disconnection from a network are a mixture of nonlinear CPEs and linear CPEs, and predetermine that all online CPEs after the disconnection from a network are nonlinear CPEs. The transceiver module 12 is specifically configured to: if the determined type of online CPEs before the disconnection from a network is inconsistent with the predetermined type of online CPEs after the disconnection from a network, send, according to a nonlinear crosstalk elimination manner supported by the predetermined type of online CPEs after the disconnection from a network, the switch instruction information to the online CPEs before the disconnection from a network.

FIG. 6 is a schematic structural diagram of another embodiment of a VCE according to the present invention. As shown in FIG. 6, based on the structure of the apparatus shown in FIG. 5, an apparatus in this embodiment may further include an obtaining module 13, configured to: if the crosstalk elimination manner supported by the predetermined type of online CPEs after the change is the linear crosstalk elimination manner, obtain a linear crosstalk elimination coefficient according to the linear crosstalk elimination manner; or if the crosstalk elimination manner supported by the predetermined type of online CPEs after the change is the nonlinear crosstalk elimination manner, obtain a nonlinear crosstalk elimination coefficient according to the nonlinear crosstalk elimination manner.

The apparatus in this embodiment may be configured to execute the technical solution of the method embodiment shown in FIG. 1, FIG. 3, or FIG. 4, and implementation principles and technical effects of the apparatus are similar and are not repeatedly described herein.

Further, the switch instruction information further includes the nonlinear crosstalk elimination coefficient.

Further, the switch instruction information is information that is encapsulated in a preset field in online reconfiguration signaling.

FIG. 7 is a schematic structural diagram of an embodiment of a CPE according to the present invention. As shown in FIG. 7, an apparatus in this embodiment may include a receiving module 21 and a processing module 22. The receiving module 21 is configured to receive switch instruction information sent by a vectoring control entity VCE, where the switch instruction information includes information that is used to indicate a crosstalk elimination manner. The processing module 22 is configured to eliminate crosstalk according to the crosstalk elimination manner indicated by the switch instruction information.

The apparatus in this embodiment may be configured to execute the technical solution of the method embodiment shown in FIG. 2, FIG. 3, or FIG. 4, and implementation principles and technical effects of the apparatus are similar and are not repeatedly described herein.

FIG. 8 is a schematic structural diagram of still another embodiment of a VCE according to the present invention. As shown in FIG. 8, an apparatus in this embodiment may include a processor 11 and a transmitter 12. The processor 11 is configured to: when a quantity of online customer premises equipments CPEs is to change, determine a type of online CPEs before the change, and predetermine a type of online CPEs after the change, where the type of CPEs means that all online CPEs are nonlinear CPEs or are a mixture of nonlinear CPEs and linear CPEs, the linear CPEs are CPEs that support only linear crosstalk elimination for a line connected to the CPEs, and the nonlinear CPEs are CPEs that support both linear crosstalk elimination and nonlinear crosstalk elimination for a line connected to the CPEs. The transmitter 12 is configured to: if the determined type of online CPEs before the change is inconsistent with the predetermined type of online CPEs after the change, send, according to a crosstalk elimination manner supported by the predetermined type of online CPEs after the change, switch instruction information to the online CPEs before the change. The switch instruction information includes information that is used to indicate a crosstalk elimination manner used by the online CPEs after the change.

The apparatus in this embodiment may be configured to execute the technical solution of the method embodiment shown in FIG. 1, FIG. 3, or FIG. 4, and implementation principles and technical effects of the apparatus are similar and are not repeatedly described herein.

Further, the processor 11 is specifically configured to: when at least one linear CPE accesses a network, determine that all online CPEs before the access to a network are nonlinear CPEs, and predetermine that online CPEs after the access to a network are a mixture of nonlinear CPEs and linear CPEs. The transmitter 12 is specifically configured to: if the determined type of online CPEs before the access to a network is inconsistent with the predetermined type of online CPEs after the access to a network, send, according to a linear crosstalk elimination manner supported by the predetermined type of online CPEs after the access to a network, the switch instruction information to the online CPEs before the access to a network.

Further, the processor 11 is specifically configured to: when all online linear CPEs disconnect from a network, determine that online CPEs before the disconnection from a network are a mixture of nonlinear CPEs and linear CPEs, and predetermine that all online CPEs after the disconnection from a network are nonlinear CPEs. The transmitter 12 is specifically configured to: if the determined type of online CPEs before the disconnection from a network is inconsistent with the predetermined type of online CPEs after the disconnection from a network, send, according to a nonlinear crosstalk elimination manner supported by the predetermined type of online CPEs after the disconnection from a network, the switch instruction information to the online CPEs before the disconnection from a network.

Further, the processor 11 is further configured to: if the crosstalk elimination manner supported by the predetermined type of online CPEs after the change is the linear crosstalk elimination manner, obtain a linear crosstalk elimination coefficient according to the linear crosstalk elimination manner; or if the crosstalk elimination manner supported by the predetermined type of online CPEs after the change is the nonlinear crosstalk elimination manner, obtain a nonlinear crosstalk elimination coefficient according to the nonlinear crosstalk elimination manner.

Further, the switch instruction information further includes the nonlinear crosstalk elimination coefficient.

Further, the switch instruction information is information that is encapsulated in a preset field in online reconfiguration signaling.

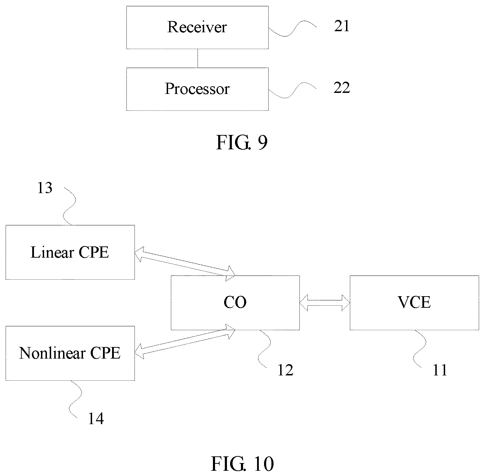

FIG. 9 is a schematic structural diagram of another embodiment of a CPE according to the present invention. As shown in FIG. 9, an apparatus in this embodiment may include a receiver 21 and a processor 22. The receiver 21 is configured to receive switch instruction information sent by a vectoring control entity VCE, where the switch instruction information includes information that is used to indicate a crosstalk elimination manner. The processor 22 is configured to eliminate crosstalk according to the crosstalk elimination manner indicated by the switch instruction information.

The apparatus in this embodiment may be configured to execute the technical solution of the method embodiment shown in FIG. 2, FIG. 3, or FIG. 4, and implementation principles and technical effects of the apparatus are similar and are not repeatedly described herein.

FIG. 10 is a schematic structural diagram of an embodiment of a copper broadband access system according to the present invention. As shown in FIG. 10, the system in this embodiment includes a VCE 11, a CO 12, a linear CPE 13 that supports only linear crosstalk elimination for a line connected to the CPE, and a nonlinear CPE 14 that supports both linear crosstalk elimination and nonlinear crosstalk elimination for a line connected to the CPE. The VCE 11 may use the structure of the apparatus embodiment shown in FIG. 5 or FIG. 6; correspondingly, the VCE 11 may execute the technical solution of the method embodiment shown in FIG. 1, FIG. 3, or FIG. 4, and implementation principles and technical effects of the VCE 11 are similar and are not repeatedly described herein. The nonlinear CPE 14 may use the structure of the apparatus embodiment shown in FIG. 7; correspondingly, the nonlinear CPE 14 may execute the technical solution of the method embodiment shown in FIG. 2, FIG. 3, or FIG. 4, and implementation principles and technical effects of the nonlinear CPE 14 are similar and are not repeatedly described herein.

Further, the VCE 11 may use the structure of the apparatus embodiment shown in FIG. 8; correspondingly, the VCE 11 may execute the technical solution of the method embodiment shown in FIG. 1, FIG. 3, or FIG. 4, and implementation principles and technical effects of the VCE 11 are similar and are not repeatedly described herein. The nonlinear CPE 14 may use the structure of the apparatus embodiment shown in FIG. 9; correspondingly, the nonlinear CPE 14 may execute the technical solution of the method embodiment shown in FIG. 2, FIG. 3, or FIG. 4, and implementation principles and technical effects of the nonlinear CPE 14 are similar and are not repeatedly described herein.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A crosstalk elimination method performed by a vectoring control entity, VCE (11), the method comprising:
• when a quantity of online customer premises equipments, CPEs, is to change, determining a type of online CPEs before the change, and predetermining a type of online CPEs after the change, wherein the type of CPEs means that all online CPEs are nonlinear CPEs or are a mixture of nonlinear CPEs and linear CPEs, the linear CPEs are CPEs that support only linear crosstalk elimination for a line connected to the CPEs, and the nonlinear CPEs are CPEs that support both linear crosstalk elimination and nonlinear crosstalk elimination for a line connected to the CPEs (step 101),
wherein the step of when the quantity of online customer premises equipments CPEs is to change, determining the type of online CPEs before the change, and predetermining the type of online CPEs after the change comprises:
∘ when at least one linear CPE accesses a network, determining that all online CPEs before an access to the network are nonlinear CPEs, and predetermining that online CPEs after the access to the network are a mixture of nonlinear CPEs and linear CPEs;
∘ when all online linear CPEs disconnect from the network, determining that online CPEs before a disconnection from the network are a mixture of nonlinear CPEs and linear CPEs, and predetermining that all online CPEs after the disconnection from the network are nonlinear CPEs; and
• if the determined type of online CPEs before the change is inconsistent with the predetermined type of online CPEs after the change, sending, according to a crosstalk elimination manner supported by the predetermined type of online CPEs after the change, switch instruction information to the online CPEs before the change, wherein the switch instruction information comprises information that is used to indicate the crosstalk elimination manner used by the online CPEs after the change (step 102),
wherein the step of if the determined type of online CPEs before the change is inconsistent with the predetermined type of online CPEs after the change, sending, according to the crosstalk elimination manner supported by the predetermined type of online CPEs after the change, switch instruction information to the online CPEs before the change comprises:
∘ if a determined type of online CPEs before the access to the network is inconsistent with a predetermined type of online CPEs after the access to the network, sending, according to a linear crosstalk elimination manner supported by the predetermined type of online CPEs after the access to the network, the switch instruction information to the online CPEs before the access to the network;
∘ if a determined type of online CPEs before the disconnection from the network is inconsistent with a predetermined type of online CPEs after the disconnection from the network, sending, according to a nonlinear crosstalk elimination manner supported by the predetermined type of online CPEs after the disconnection from the network, the switch instruction information to the online CPEs before the disconnection from the network.

2. The method according to claim 1, wherein before the sending switch instruction information to the online CPEs before the change, the method further comprises:
if the crosstalk elimination manner supported by the predetermined type of online CPEs after the change is the linear crosstalk elimination manner, obtaining a linear crosstalk elimination coefficient according to the linear crosstalk elimination manner; or
if the crosstalk elimination manner supported by the predetermined type of online CPEs after the change is the nonlinear crosstalk elimination manner, obtaining a nonlinear crosstalk elimination coefficient according to the nonlinear crosstalk elimination manner.

3. The method according to claim 2, wherein the switch instruction information further comprises the nonlinear crosstalk elimination coefficient.

4. The method according to any one of claims 1 to 3, wherein the switch instruction information is information that is encapsulated in a preset field in online reconfiguration signaling.

5. A vectoring control entity, VCE (11), configured to perform any of the methods according to claims 1 - 4.

## Patentansprüche

1. Übersprechunterdrückungsverfahren, das durch eine Vektorisierungssteuerungsentität, VCE (11), durchgeführt wird, wobei das Verfahren Folgendes umfasst:
• wenn eine Anzahl von Online-Kundenhausausrüstungen, Online-CPEs, geändert werden soll, Bestimmen einer Art von Online-CPEs vor der Änderung und Vorbestimmen einer Art von Online-CPEs nach der Änderung, wobei die Art von CPEs bedeutet, dass alle Online-CPEs nichtlineare CPEs sind oder eine Mischung von nichtlinearen CPEs und linearen CPEs sind, die linearen CPEs CPEs sind, die nur lineare Übersprechunterdrückung für eine mit den CPEs verbundene Leitung unterstützen und die nichtlinearen CPEs CPEs sind, die sowohl lineare Übersprechunterdrückung als auch nichtlineare Übersprechunterdrückung für eine mit den CPEs verbundene Leitung unterstützen (Schritt 101),
wobei der Schritt von, wenn die Anzahl von Online-Kundenhausausrüstungen, Online-CPEs, geändert werden soll, Bestimmen der Art von Online-CPEs vor der Änderung und Vorbestimmen der Art von Online-CPEs nach der Änderung Folgendes umfasst:
∘ wenn mindestens eine lineare CPE auf ein Netz zugreift, Bestimmen, dass alle Online-CPEs vor einem Zugriff auf das Netz nichtlineare CPEs sind, und Vorbestimmen, dass Online-CPEs nach dem Zugriff auf das Netz eine Mischung von nichtlinearen CPEs und linearen CPEs sind;
∘ wenn sich alle linearen Online-CPEs von dem Netz trennen, Bestimmen, dass Online-CPEs vor einer Trennung von dem Netz eine Mischung von nichtlinearen CPEs und linearen CPEs sind, und Vorbestimmen, dass alle Online-CPEs nach der Trennung von dem Netz nichtlineare CPEs sind; und
• falls die bestimmte Art von Online-CPEs vor der Änderung mit der vorbestimmten Art von Online-CPEs nach der Änderung inkonsistent ist, Senden, gemäß einer durch die vorbestimmte Art von Online-CPEs nach der Änderung unterstützte Übersprechunterdrückungsweise, von Umschaltanweisungsinformationen an die Online-CPEs vor der Änderung, wobei die Umschaltanweisungsinformationen Informationen umfassen, die verwendet werden zum Anzeigen der durch die Online-CPEs nach der Änderung verwendeten Übersprechunterdrückungsweise (Schritt 102),
wobei der Schritt von, falls die bestimmte Art von Online-CPEs vor der Änderung mit der vorbestimmten Art von Online-CPEs nach der Änderung inkonsistent ist, Senden, gemäß der durch die vorbestimmte Art von Online-CPEs nach der Änderung unterstützten Übersprechunterdrückungsweise, von Umschaltanweisungsinformationen an die Online-CPEs vor der Änderung Folgendes umfasst:
∘ falls eine bestimmte Art von Online-CPEs vor dem Zugriff auf das Netz mit einer vorbestimmten Art von Online-CPEs nach dem Zugriff auf das Netz inkonsistent ist, Senden, gemäß einer durch die vorbestimmte Art von Online-CPEs nach dem Zugriff auf das Netz unterstützten linearen Übersprechunterdrückungsweise, der Umschaltanweisungsinformationen an die Online-CPEs vor dem Zugriff auf das Netz;
∘ falls eine bestimmte Art von Online-CPEs vor der Trennung von dem Netz mit einer vorbestimmten Art von Online-CPEs nach der Trennung von dem Netz inkonsistent ist, Senden, gemäß einer durch die vorbestimmte Art von Online-CPEs nach der Trennung von dem Netz unterstützten nichtlinearen Übersprechunterdrückungsweise, der Umschaltanweisungsinformationen an die Online-CPEs vor der Trennung von dem Netz.

2. Verfahren nach Anspruch 1, wobei das Verfahren vor dem Senden von Umschaltanweisungsinformationen an die Online-CPEs vor der Änderung ferner Folgendes umfasst:
falls die durch die vorbestimmte Art von Online-CPEs nach der Änderung unterstützte Übersprechunterdrückungsweise die lineare Übersprechunterdrückungsweise ist, Erhalten eines linearen Übersprechunterdrückungskoeffizienten gemäß der linearen Übersprechunterdrückungsweise; oder
falls die durch die vorbestimmte Art von Online-CPEs nach der Änderung unterstützte Übersprechunterdrückungsweise die nichtlineare Übersprechunterdrückungsweise ist, Erhalten eines nichtlinearen Übersprechunterdrückungskoeffizienten gemäß der nichtlinearen Übersprechunterdrückungsweise.

3. Verfahren nach Anspruch 2, wobei die Umschaltanweisungsinformationen ferner den nichtlinearen Übersprechunterdrückungskoeffizienten umfassen.

4. Verfahren nach einem der Ansprüche 1 bis 3, wobei die Umschaltanweisungsinformationen Informationen sind, die in einem Voreinstellungsfeld in einer Online-Neukonfigurationssignalisierung eingekapselt sind.

5. Vektorisierungssteuerungsentität, VCE (11), die ausgelegt ist zum Durchführen eines der Verfahren nach Ansprüchen 1 - 4.

## Revendications

1. Procédé d'élimination de diaphonie exécuté par une entité de commande de vectorisation, VCE (11), le procédé comprenant :
• lorsqu'un nombre d'équipements de locaux d'abonné en ligne, CPE, doit changer, la détermination d'un type de CPE en ligne avant le changement, et la prédétermination d'un type de CPE en ligne après le changement, le type de CPE signifiant que tous les CPE en ligne sont des CPE non linéaires ou sont un mélange de CPE non linéaires et de CPE linéaires, les CPE linéaires étant des CPE qui ne prennent en charge qu'une élimination de diaphonie linéaire pour une ligne connectée aux CPE, et les CPE non linéaires étant des CPE qui prennent en charge à la fois une élimination de diaphonie linéaire et une élimination de diaphonie non linéaire pour une ligne connectée aux CPE (étape 101),
l'étape consistant à, lorsque le nombre d'équipements de locaux d'abonné en ligne (CPE) doit changer, déterminer le type de CPE en ligne avant le changement, et prédéterminer le type de CPE en ligne après le changement, comprenant :
∘ lorsqu'au moins un CPE linéaire accède à un réseau, la détermination que tous les CPE en ligne avant un accès au réseau sont des CPE non linéaires, et la prédétermination que les CPE en ligne après l'accès au réseau sont un mélange de CPE non linéaires et de CPE linéaires ;
∘ lorsque tous les CPE linéaires en ligne se déconnectent du réseau, la détermination que des CPE en ligne avant une déconnexion du réseau sont un mélange de CPE non linéaires et de CPE linéaires, et la prédétermination que tous les CPE en ligne après la déconnexion du réseau sont des CPE non linéaires ; et
• si le type déterminé de CPE en ligne avant le changement n'est pas cohérent avec le type prédéterminé de CPE en ligne après le changement, l'envoi, conformément à un mode d'élimination de diaphonie pris en charge par le type prédéterminé de CPE en ligne après le changement, d'informations d'instruction de commutation aux CPE en ligne avant le changement, les informations d'instruction de commutateur comprenant des informations qui sont utilisées pour indiquer le mode d'élimination de diaphonie utilisé par les CPE en ligne après le changement (étape 102),
l'étape consistant à, si le type déterminé de CPE en ligne avant le changement est incohérent avec le type prédéterminé de CPE en ligne après le changement, envoyer, conformément au mode d'élimination de diaphonie pris en charge par le type prédéterminé de CPE en ligne après le changement, des informations d'instruction de commutation aux CPE en ligne avant le changement, comprenant :
∘ si un type déterminé de CPE en ligne avant l'accès au réseau est incohérent avec un type prédéterminé de CPE en ligne après l'accès au réseau, l'envoi, conformément à un mode d'élimination de diaphonie linéaire pris en charge par le type prédéterminé de CPE en ligne après l'accès au réseau, des informations d'instruction de commutation aux CPE en ligne avant l'accès au réseau ;
∘ si un type déterminé de CPE en ligne avant la déconnexion du réseau est incohérent avec un type prédéterminé de CPE en ligne après la déconnexion du réseau, l'envoi, conformément à un mode d'élimination de diaphonie non linéaire pris en charge par le type prédéterminé de CPE en ligne après la déconnexion du réseau, des informations d'instruction de commutation aux CPE en ligne avant la déconnexion du réseau.

2. Procédé selon la revendication 1, dans lequel, avant l'envoi d'informations d'instruction de commutation aux CPE en ligne avant le changement, le procédé comprend en outre :
si le mode d'élimination de diaphonie prise en charge par le type prédéterminé de CPE en ligne après le changement est le mode d'élimination de diaphonie linéaire, l'obtention d'un coefficient d'élimination de diaphonie linéaire conformément au mode d'élimination de diaphonie linéaire ; ou
si le mode d'élimination de diaphonie pris en charge par le type prédéterminé de CPE en ligne après le changement est le mode d'élimination de diaphonie non linéaire, l'obtention d'un coefficient d'élimination de diaphonie non linéaire conformément au mode d'élimination de diaphonie non linéaire.

3. Procédé selon la revendication 2, dans lequel les informations d'instruction de commutation comprennent en outre le coefficient d'élimination de diaphonie non linéaire.

4. Procédé selon l'une quelconque des revendications 1 à 3, dans lequel les informations d'instruction de commutation sont des informations qui sont encapsulées dans un champ prédéfini dans une signalisation de reconfiguration en ligne.

5. Entité de commande de vectorisation, VCE (11), configurée pour mettre en oeuvre l'un quelconque des procédés selon les revendications 1 à 4.
